(19) **Europäisches Patentamt**

**European Patent Office**

**Office européen des brevets**

(11) Publication number: **0 375 725 B1**

(12) **EUROPEAN PATENT SPECIFICATION**

(45) Date of publication of patent specification: **20.12.95**  (51) Int. Cl.⁶: **C05G 3/02**, C05C 9/00

(21) Application number: **88907894.5**

(22) Date of filing: **01.08.88**

(86) International application number:
**PCT/US88/02610**

(87) International publication number:
**WO 89/01462 (23.02.89 89/05)**

(54) **COMPOSITIONS FOR BIOLOGICAL CONTROL OF PLANT PATHOGENIC NEMATODES**

(30) Priority: **11.08.87 US 84061**

(43) Date of publication of application:
**04.07.90 Bulletin 90/27**

(45) Publication of the grant of the patent:
**20.12.95 Bulletin 95/51**

(84) Designated Contracting States:
**AT BE DE FR GB IT NL**

(56) References cited:
**US-A- 1 857 914**
**US-A- 4 536 207**

(73) Proprietor: **IGENE BIOTECHNOLOGY, INC.**
**9110 Red Branch Road**
**Columbia, MD 21045 (US)**

(72) Inventor: **RODRIGUEZ-KABANA, R.**
**1026 East Sandford Avenue**
**Auburn, AL 36830 (US)**
Inventor: **MILCH, Robert, Austin**
**8406 Park Heights Avenue**
**Baltimore, MA 21208 (US)**

(74) Representative: **Woodcraft, David Charles et al**
**BROOKES & MARTIN**
**High Holborn House**
**52/54 High Holborn**
**London, WC1V 6SE (GB)**

Rank Xerox (UK) Business Services
(3.10/3.09/3.3.3)

## Description

### FIELD OF THE INVENTION

This invention relates to methods for optimizing the functional properties and use of compositions of organic matter for the biological control of plant pathogens in soils. More particularly, the invention relates to unconventional methods for using specific organic nitrogen and organic carbon materials to formulate optimized and cost-effective soil amendments which have a low carbon:nitrogen (C:N) ratio and a high Kjeldahl "protein" content, are not phytotoxic, and render plant-pathogenic nematodes and/or their eggs susceptible to destruction by native soil microorganisms and thus act indirectly as biological control agents to suppress nematode populations in soils.

### BACKGROUND OF THE INVENTION

Man has added organic and inorganic amendments to soil for centuries to improve soil fertility and increase crop yield. The nematicidal effects of some of these amendments have been recognized for some time and reviews on the subject have been published; e.g., R. Rodriguez-Kabana, J. Nematol. 18:129-135 (1986) and R. Rodriguez-Kabana, G. Morgan-Jones and I. Chet, Plant and Soil, 100:237-247 (1987), Particularly noteworthy is page 239 of this article, which discloses that organic soil amendments are nematicidal when the C:N ratio is less than 20, but the amendments are phytotoxic when the C:N ratio drops below 11.

While most nematicidal soil amendments are oil-cakes and meals or manures and composts, it has also been found that some organic nitrogenous amendments, especially those with low carbon:nitrogen (C:N) ratios and high "protein" contents as measured by Kjeldahl nitrogen methods, act when added in quantity to soils as if they were toxins for nematodes. Most interesting among these organic nitrogenous amendments for control of plant-pathogenic soil nematodes are materials which contain ammoniacal nitrogen, such as urea (e.g., see J.T. Walker, J. Nematology, 3:43-49 (1971)) and materials which contain chitin and relaxed mucopolysaccharides (e.g., see M.B. Linford, F. Yap and J.M. Oliviera, Soil Science, 45:127-141 (1938); R. Mitchell and M. Alexander, Plant Dis. Reporter, 45:487 (July 15, 1961); Soil Sc. Soc., 26:556-558 (1962); I.H. Mian, G. Bodoy, R.A. Shelby, R. Rodriguez-Kabana and G. Morgan-Jones, Nematropica, 12:71-84 (1982); G. Godoy, R. Rodriguez-Kabana, R.A. Shelby and G. Morgan-Jones, Nematropica, 13:63-74 (1983); R. Rodriguez-Kabana, G. Morgan-Jones and B. Ownley Gintis, Nematropica, 14:10-25 (1984) and A.K. Culbreath, R. Rodriguez-Kabana and G. Morgan-Jones, Nematropica, 16:153-166 (1986). See also McCandliss, Eastwood and Milch, U.S. Pat. No. 4,536,207). J.T. Walker, J. Nematology, 1: 193-280 (1969) studied the nematicidal effects of soil amendments with soybean meal and of soil amendments with urea, but this reference does not discuss soil amendments with both urea and soybean meal.

Urea has been demonstrated to be a good nematicide at high application rates (e.g., ≧ 300 mg N/kg soil) but it is also phytotoxic at these levels owing to its low C:N ratio. Detrimental effects of high soil concentrations of urea can be overcome, however, by supplementing urea amendments with additional available carbon required to ensure adequate stimulation in soils of microbial metabolic activity (See, for example: Huebner, Dissertation: Hemicellulosic Waste and Urea for Control of Plant Parasitic Nematodes, Order No. DA8212687, Auburn University (1982), Chemistry Abstracts, 97:67774b; R. Rodriguez-Kabana and P.S. King, Nematropica, 10:38-44 (1980); and R.A. Huebner, R. Rodriguez-Kabana and R.M. Patterson, Nematropica, 13:37-54 (1983).

It is known to prepare a fertilizer by combining urea with soybean meal (see, e.g., Keyssner et. al., U.S. Pat. No. 1,857,914 and Baskin, U.S. Pat. No. 3,558,299).

Soybean meal compositions have been disclosed for use in the control of nematodes, but these references do not teach the use of urea in combination with soybean meal (see, e.g., Walker, supra; Kodama et al, U.S. Pat. No. 3,660,571; McBrayer, U.S. Pat. No. 4,442,092 (sesame meal instead of soybean meal); Carlile et al, U.S. Pat. No. 434,243 (cotton-seed meal instead of soybean meal; control of insects and cut-worm instead of nematodes); McCandliss et al, U.S. Pat. No. 4,536,207 (shellfish waste instead of soybean meal)).

US 1 857 914 describes fertilizer compositions in which 75 parts soybean meal freed from oil is heated for ½ hour to 120°C and mixed with 25 parts of urea. The document also describes compositions prepared by heating 60 parts soybean meal with 40 parts urea for an hour in excess of 100°C. The compositions are said to have good storage properties.

According to the invention there is provided the use of a composition comprising in admixture;
a) vegetable, fruit or nut meals, and

b) a source of urea,

in the stimulation of reproduction and development of normal soil microflora in plant growth media which produce ammonia and enzymes that are antagonistic to plant pathogenic nematodes of selected crop plants, the ratio of a) to urea provided by b) in the composition being 2:1 to 8:1 by applying 1 to 3 grams of the composition per kilogram of medium.

According to the invention there is provided a soil amendment composition capable of stimulating the reproduction and development of normal soil microflora which produce ammonia and enzymes that are antagonistic to plant pathogenic nematodes of selected crop plants, which comprise in admixture:

(a) non-heat-treated vegetable, fruit or nut meals, and

(b) a source of urea,

the ratio by weight of (a) to urea provided by (b) in said composition being 2:1 to 8:1, the amounts of (a) and (b) in said composition being adapted to provide 1 to 3 grams of said composition per kilogram of soil in which said composition is admixed.

BRIEF DESCRIPTION OF THE DRAWINGS

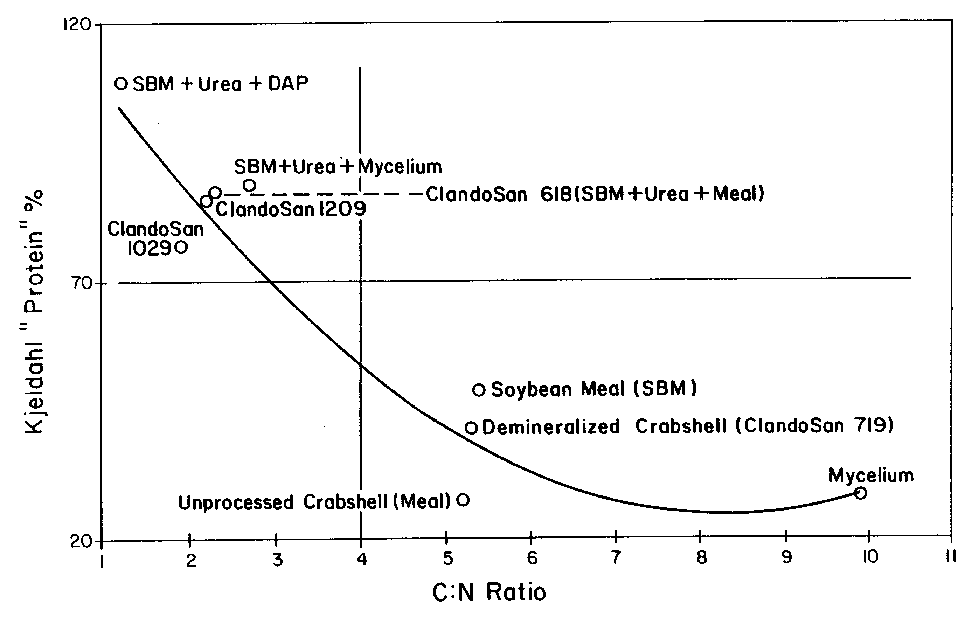

Figure 1 is a graph plotting C:N ratio against Kjeldahl protein (%), illustrating the combination of low C:N ratio of below 4 with high Kjeldahl protein (%) of at least 70% in the preferred chitin-protein complex, urea, soybean meal formulations described in one embodiment herein.

DETAILED DESCRIPTION OF THE INVENTION

All percentages and ratios herein are by weight unless otherwise stated.

A wide variety of plant pathogenic nematodes can be controlled in accordance with the present invention. Such nematodes can be endoparasitic and include but are not limited to those selected from the group consisting of root-knot nematodes of the Meloidogyne genus, root-lesion nematodes of the Pratylenchus genus, cyst-forming nematodes of the Heterodera or Globodera genus, citrus nematodes of the Tylenchulus genus, reniform nematodes of the Rotylenchulus genus, and burrowing nematodes of the Radopholus genus. The plant pathogenic nematode can be ectoparasitic, including but not limited to those selected from the group consisting of dagger nematodes of the Xiphinema genus, stubby-root nematodes of the Trichodorus genus, spiral nematodes of the Rotylenchus or Helicotylenchus genus, sting nematodes of the Belonolaimus genus, and pin nematodes of the Paratylenchus genus. Alternatively, the plant pathogenic nematode can include one or more genus selected from the group consisting of leaf nematodes of the Aphelenchoides genus and bulb and stem nematodes of the Dutylenchus genus.

A. The Soybean Meal-Urea Compositions

In the soybean meal-urea compositions of this invention, the ratio by weight of soybean meal to urea provided by a source thereof (within the present invention, the term "urea" is often used to mean "source of urea", i.e., any of the well known inorganic or organic substances usable in agriculture as a source of urea are employable herein, such as isobutyldienediurea (IBDU) crotonylidiene diurea (CDU), difurforylidene triureide, oxalyldiuride and triuret is 2:1 to 8:1, preferably 2:1 to 6:1. The total C:N ratio of the soybean meal-urea composition is below 5, preferably below 4, with a nitrogen content (%) of 12 to 22% preferably 13 to 20%, corresponding to a Kjeldahl protein of over 70%, 75 to 137.5%, preferably 81.25 to 125%. The actual amounts in weight of soybean meal and urea or source of urea material in the soybean meal-urea compositions of this invention are such to provide in practice 1 to 3 grams of soybean meal plus urea per kilogram of soil in which said composition is admixed. These application values roughly translate to about 2.5 - 7.5 tonnes per hectare (1 to 3 tons) of soybean meal plus urea (per treated acre) (on a broadcasted or banded basis) based on admixture to a depth of about 15 cm (6 inches).

For part or all of the soybean meal, there can be substituted other vegetable, fruit and nut meals such as cottonseed meal, sunflower seed meal, linseed meal, peanut meal, safflower meal, corn gluten meal, jojoba meal, sesame meal, dried citrus pulp, dehydrated or sun-cured alfalfa, etc.

The soybean meal and urea compositions of this invention can be prepared by dry blending or through pellet formation as described hereinafter.

A-1. The Chitin-Containing Compositions

The chitin-protein complex can be derived from arthropod exoskeleton shells, especially those wherein the arthropod is a chelicerata or a mandibulata. Alternatively, the chitin-protein complex is derived from a microorganism containing said glucosamine, especially a microorganism which is a waste product from an industrial fermentation process; preferably, such a microorganism is a filamentous fungus and the source of the glucosamine is its mycelium, especially when the microorganism is one from a citric acid or antibiotic-producing fermentation process. Further, a mixture of both arthropod and microorganism sources, preferably from sources wherein the arthropod is a crustacean and the microorganism is a filamentous fungus, can be used. The chitin-protein complex can be obtained by demineralization of crustacean shells as described in U.S. 4,536,207. In this preferred embodiment, using chitin-protein complex - urea - soybean meal as an example, the proportion of chitin-protein complex to urea to meal is 1.5 to 3.5 parts chitin-protein complex and 3.0 to 5.0 parts meal, each to 1.0 part urea. Most preferably, the ratio of chitin-protein complex:urea:soybean mcal is 2.5:1:4.0 as found in ClandoSan[R] 618, formulated to contain about 25% chitin-protein complex, about 10% urea and about 40% soybean meal. Pulverized crab meal and demealed crab shell contain about 50% chitin-protein complex, while demineralized shell contains about 75% chitin-protein complex.

The chitin-containing compositions preferably contain a total C:N ratio of 1:1 to 6:1, preferably 4:1 or less, with at least 50%, preferably at least 80% of the C:N ratio coming from organic sources. Furthermore, the Kjeldahl "protein" content is at least 25%, preferably at least 70% and most preferably over 80%.

A.2 Other Ammoniacal Nitrogen Source Compositions

Materials such as ammonium phosphates can be substituted for all or part of the chitin-protein complex of embodiment A-1.

CLANDOSAN[R] (CHITIN-PROTEIN) BIOLOGICAL CONTROL MATERIALS

| DESCRIPTION: | 601 DEMEALED SHELL | 1220 DEMINERALIZED SHELL | 107 601 + UREA | 1209 107 + SBM | 618 SBM + UREA + CRABMEAL |
|---|---|---|---|---|---|
| **PROXIMATE ANALYSIS (%)** | | | | | |
| Moisture | 11.2 | 12.3 | 10.6 | 8.3 | 8.6 |
| Ash | 49.9 | 13.3 | 33.0 | 22.5 | 20.5 |
| Organic Matter | 38.9 | 74.4 | 56.4 | 69.2 | 67.7 |
| **ELEMENTAL ANALYSIS (%)** | | | | | |
| Carbon (Total) | 22.9 | 36.2 | 22.1 | 30.0 | 31.1 |
| Carbon (Organic) | 17.4 | 35.2 | 18.3 | 27.8 | 29.5 |
| Hydrogen | 4.0 | 6.1 | 4.5 | 5.0 | 4.6 |
| Oxygen | 31.8 | 33.7 | 34.0 | 32.0 | 32.6 |
| Nitrogen (Kjeldahl) | 3.7 | 6.6 | 14.8 | 13.7 | 13.4 |
| Calcium | 19.3 | 4.4 | 13.5 | 7.8 | 6.0 |
| Phosphorus | 1.8 | 0.8 | 1.3 | 0.8 | 0.9 |
| Magnesium | 0.9 | 0.2 | 0.7 | 0.5 | 0.4 |
| Sodium | 1.0 | 0.2 | 0.8 | 0.5 | 0.8 |
| Potassium | 0.1 | <0.1 | 0.3 | 0.7 | 1.0 |
| **CARBON:NITROGEN ANALYSIS** | | | | | |
| Total C:N Ratio | 5.4 | 5.3 | 1.5 | 2.2 | 2.4 |
| Organic C:N Ratio | 4.1 | 5.2 | 1.2 | 2.1 | 2.3 |
| Kjeldahl "Protein" (%) | 23.0 | 41.4 | 92.5 | 85.8 | 83.4 |

CRUSTACEAN (BLUE CRAB) SOURCE: SBM = SOYBEAN MEAL

EP 0 375 725 B1

**TABLE A**

**CHEMICAL COMPOSITION OF COMPONENTS OF CLANDOSAN[R] (CHITIN-PROTEIN) BIOLOGICAL CONTROL MATERIALS**

| DESCRIPTION: | SOYBEAN MEAL (SBM) | UREA | DIAMMONIUM PHOSPHATE | UNPROCESSED CRAB MEAL | FUNGAL MYCELIUM | HORSE-SHOE CRAB | PANAMA SHRIMP | CHITIN | CHITOSAN |
|---|---|---|---|---|---|---|---|---|---|
| **PROXIMATE ANALYSIS (%)** | | | | | | | | | |
| Moisture | 6.7 | <1.0 | 1.8 | 13.2 | 5.4 | 10.1 | 11.7 | 6.2 | 11.5 |
| Ash | 6.1 | <0.1 | 45.4 | 44.6 | 5.5 | 23.1 | 30.0 | 5.2 | 2.5 |
| Organic Matter | 87.2 | 100.0 | 52.8 | 42.2 | 89.1 | 68.0 | 58.3 | 88.6 | 86.0 |
| **ELEMENTAL ANALYSIS (%)** | | | | | | | | | |
| Carbon (Total) | 42.1 | 20.3 | 0.3 | 26.0 | 44.6 | 36.4 | 31.8 | 41.6 | 38.7 |
| Carbon (Organic) | 42.1 | 20.2 | 0.2 | 21.9 | 44.6 | 35.0 | 29.0 | 37.3 | 38.7 |
| Hydrogen | 6.8 | 6.7 | 4.8 | 4.5 | 6.7 | 5.9 | 4.8 | 6.4 | 7.0 |
| Oxygen | 34.5 | 25.8 | 20.3 | 33.0 | 38.9 | 29.8 | 32.0 | 42.6 | 43.9 |
| Nitrogen (Kjeldahl) | 7.8 | 46.4 | 12.5 | 4.4 | 4.5 | 8.2 | 6.7 | 6.0 | 6.6 |
| Calcium | 0.3 | 0.1 | 1.3 | 13.9 | 2.1 | 5.2 | 10.9 | 1.7 | 0.3 |
| Phosphorus | 0.6 | <0.1 | 15.3 | 1.4 | 0.1 | 0.7 | 2.0 | 0.7 | 0.1 |
| Magnesium | 0.3 | <0.1 | 0.3 | 0.6 | <0.1 | 0.2 | 0.8 | 0.2 | 0.0 |
| Sodium | 0.0 | <0.1 | 0.1 | 1.6 | <0.1 | 1.4 | 0.4 | 0.1 | 0.7 |
| Potassium | 1.7 | <0.1 | 0.2 | 0.4 | <0.1 | 0.3 | 0.1 | <0.1 | <0.1 |
| **CARBON:NITROGEN ANALYSIS** | | | | | | | | | |
| Total C:N Ratio | 5.3 | 0.4 | 0.02 | 5.2 | 9.9 | 4.5 | 4.6 | 6.6 | 5.3 |
| Organic C:N Ratio | 5.3 | 0.4 | 0.02 | 4.4 | 9.9 | 4.3 | 0.4 | 5.9 | 5.3 |
| Kjeldahl "Protein" (%) | 48.8 | 289.7 | 78.3 | 27.3 | 28.2 | 51.0 | 41.6 | 37.3 | 41.3 |

Application of the Compositions

A nematicidal or nematistatic composition of the present invention is employed by admixing it with a suitable plant growth medium, e.g., soil containing both inorganic clay minerals and organic humus substances, and the admixture preferably extends to the root zone of a selected crop growing therein. For horticultural applications, the plant growth medium is generally a potting soil; although inorganic growth media can in principle be employed, they must contain the requisite microflora or the desired effect will not be achieved.

For ease of application and ensuring a gradual release of ammoniacal nitrogen, it is preferred that the composition be applied in the form of granules, pellets or prills.

In its method aspect, the present invention admixes at least a nematistatically effective and non-phytotoxic amount of the desired amendment with a suitable plant growth medium to suppress the growth of the plant-pathogenic nematodes. Preferably, the admixing is done at least one week prior to seeding or planting in the plant growth medium On a commercial scale, these compositions are plowed and harrowed, tilled, rototilled or otherwise mixed into the topsoil (Horizon A) and subsoil (Horizon B) layers of agricultural soils and into all layers of potting and nursery stock soils, preferably 1-3 weeks before planting of living seeds or seedlings and tree saplings in order to stimulate the growth and proliferation of actinomyces and other normal soil microorganisms which produce enhanced levels of chitinase and urease enzyme activity and enhanced levels of ammonia in these soils.

## Example 1

Fertilizer and Nematicidal Effects of Soybean Meal and Urea Compositions

Effects of amending nematode-infested soils were determined using urea soil amendment concentrations of 0.25 to 1.00 gram per kilogram soil (0.025 - 0.10% w/w) and soybean meal amendments at concentrations of 1.0 to 4.0 grams per kilogram soil (0.1 - 0.4% w/w).

Amended and control soils were placed in polyvinyl chloride cylindrical pots (10 cm diameter, 1 liter volume) and the pots were allowed to stand from 1-3 weeks on a greenhouse table to permit partial decomposition of the amendments by soil microorganisms. Amended and untreated soils were disposed in the greenhouse in a completely randomized arrangement. Eight replications (pots) were used for each soil amendment, or treatment.

First Planting:

After this 1-3 week "incubation" period, five "Summer (or, Yellow) Crookneck" squash (Cucurbita pepo L.) seeds were planted in each pot. The plants were watered daily and were then removed from the soil and two 100 cc sample of soil were taken from each pot. The first sample was used to determine nematode numbers using the "salad bowl" incubation method described by Rodriguez-Kabana and Pope, Nematropica, 11:175-185 (1981); the second sample was used for microbial and chemical analysis. Samples for microbial analysis were stored moist at 5°C prior to use. Residual soil was spread on aluminum foil to air-dry at 25-27°C after which it was stored in polyethylene bags at 4°C in the dark until further analyzed.

Squash plants were washed and the number of galls caused by M. arenaria in the roots were counted. The height of the shoot and the fresh weights of the shoots and roots were also measured. In addition, two subjective ratings of the roots were made. The first was a root-knot galling index based on a scale of 0-10, whore 0 represents no galling and 10 represents the maximum level of galling as described by Zeck, Pflanzenschutz-Nacht, 24:141-144 (1971). The second subjective rating was an evaluation of the general appearance of the roots based on a scale of 1 to 5, where 1 represents the best root condition (abundant root hairs and rootlets without necrotic tissue) and 5 represents the worst condition (roots showing restricted development, no root hairs or fine roots, and widespread necrotic tissue).

Soil pH was measured using 10 grams of air-dried soil suspended in a plastic cup containing 10 ml of demineralized water. The suspension was stirred and allowed to stand for 30 minutes after which time the pH was measured using a Model 12 Corning pH meter. Following pH determination, the soil suspension was diluted with an additional 10 ml of demineralized water, and 10 ml of the diluted suspension were centrifuged (20 minutes at 5,000 x g) for measurement of electrical conductivity. Conductivity of the supernatant was determined using a Model RC 16 B2 Industrial Instruments Wheatstone Bridge fitted with a conductivity cell (k = 1.0).

Second Planting:

Following the removal of the squash plants and soil samples, the remaining soil in each pot was thoroughly mixed and planted with a single four-week old "Rutgers" tomato (Lycopersicon esculentum Mill.) seedling. These were maintained as described for the squash for an additional period of five to eight weeks. After this period, the tomato plants were removed, washed, measured and evaluated as described for the squash.

All data were analyzed using standard factorial analysis procedures and standard tests for statistical significance.

TABLE 2

NEMATODE SUPPRESSION AND FERTILIZER EFFECTS OF SOYBEAN MEAL-UREA COMPOSITIONS

FIRST PLANTING: SQUASH

SET UP DAY 0

SQUASH PLANTED DAY 15
SQUASH HARVESTED DAY 53

| Soil Amendment Conc. (G/KG) | | Soil Features | | Gall Rate | Galls/GM Fresh Root | | Root Wgt. (GM) | Top Hgt. (CM) | Top Wgt. (GM) | Plant Weight | |
| Soybean Meal | Urea | pH | Conduc-tivity | | Number | %Change | | | | (GM) | (% Change) |
|---|---|---|---|---|---|---|---|---|---|---|---|
| CONTROL SOYBEAN MEAL | | | | | | | | | | | |
| 0.0 | 0.0 | 6.0 | 33 | 3.2 | 42.5 | --- | 0.40 | 15.7 | 2.2 | 2.6 | --- |
| 1.0 | 0.0 | 5.9 | 31 | 3.9 | 29.0 | - 31.8 | 0.69 | 29.9 | 6.1 | 6.8 | +161.5 |
| 2.0 | 0.0 | 5.7 | 27 | 2.7 | 17.5 | - 58.8 | 0.63 | 33.4 | 6.6 | 7.2 | +176.9 |
| 3.0 | 0.0 | 5.5 | 27 | 2.0 | 25.8 | - 39.3 | 0.31 | 24.6 | 3.9 | 4.2 | + 61.5 |
| 4.0 | 0.0 | 5.5 | 33 | 1.2 | 6.4 | - 84.9 | 0.47 | 23.3 | 3.9 | 4.4 | + 69.2 |
| SOYBEAN MEAL + UREA | | | | | | | | | | | |
| 1.0 | 0.5 | 5.8 | 26 | 0.5 | 2.0 | - 95.3 | 0.49 | 27.5 | 5.4 | 5.9 | +126.9 |
| 2.0 | 0.5 | 5.7 | 26 | 0.5 | 1.7 | - 96.0 | 0.58 | 28.5 | 5.5 | 6.2 | +134.6 |
| 3.0 | 0.5 | 5.8 | 27 | 0.5 | 2.8 | - 93.4 | 0.72 | 36.3 | 10.1 | 10.8 | +314.4 |
| 4.0 | 0.5 | 5.9 | 48 | 0.0 | 0.0 | -100.0 | 0.40 | 22.4 | 3.9 | 4.3 | + 65.4 |

TABLE 2 (con't)

NEMATODE SUPPRESSION AND FERTILIZER EFFECTS OF SOYBEAN MEAL-UREA COMPOSITIONS

| | Soil Amendment Conc. (G/KG) | | Soil Features | | Gall Rate | Galls/GM Fresh Root | | Root Wgt. (GM) | Top Hgt. (CM) | Top Wgt. (GM) | Plant Weight | |
|---|---|---|---|---|---|---|---|---|---|---|---|---|
| | Soybean Meal | Urea | pN | Conduc- tivity | | Number | %Change | | | | (GM) | (% Change) |
| SECOND PLANTING: TOMATOES | | | | | | | | | | | | |
| TOMATOES PLANTED DAY 53 | | | | | | | | | | | | |
| TOMATOES HARVESTED DAY 113 | | | | | | | | | | | | |
| CONTROL | 0.0 | 0.0 | 6.1 | 42 | 5.0 | 36.2 | -- | 1.3 | N | 3.0 | 4.3 | -- |
| SOYBEAN MEAL | 1.0 | 0.0 | 6.0 | 41 | 4.9 | 36.7 | - 1.4 | 0.9 | E | 1.6 | 2.5 | - 41.9 |
| | 2.0 | 0.0 | 5.8 | 58 | 5.8 | 35.6 | - 1.7 | 0.9 | E | 1.5 | 2.4 | - 44.2 |
| | 3.0 | 0.0 | 5.7 | 43 | 4.0 | 15.0 | - 58.6 | 1.4 | D | 2.5 | 3.9 | - 9.3 |
| | 4.0 | 0.0 | 5.8 | 37 | 3.0 | 10.0 | - 72.4 | 2.4 | | 5.4 | 7.8 | + 81.4 |
| SOYBEAN MEAL + UREA | 1.0 | 0.5 | 5.9 | 39 | 2.3 | 8.2 | - 77.3 | 1.7 | D | 3.5 | 5.2 | + 20.9 |
| | 2.0 | 0.5 | 5.8 | 40 | 1.9 | 10.6 | - 70.7 | 1.6 | A | 2.9 | 4.5 | + 4.7 |
| | 3.0 | 0.5 | 6.0 | 31 | 0.0 | 0.0 | -100.0 | 2.9 | T | 6.1 | 9.0 | +109.3 |
| | 4.0 | 0.5 | 6.0 | 32 | 0.0 | 0.0 | -100.0 | 3.0 | A | 5.5 | 8.5 | + 97.7 |

## TABLE 3

### NEMATODE SUPPRESSION EFFECTS OF SOYBEAN MEAL-UREA COMPOSITIONS IN SECOND (TOMATO) PLANTINGS

| | Soil Amendment Conc. (G/KG) | | Gall Rate | Galls/GM Fresh Root | | ROOT-KNOT LARVAE | | NEMATODES FROM ROOTS | | | |
| | Soybean Meal | Urea | | Number | %Change | (No.) | (No/GM Root) | LESION (PRATYLENCHUS) (No.) | No./GM Root | SAPROPHAGOUS (No.) | (No./GM Root) |
|---|---|---|---|---|---|---|---|---|---|---|---|
| **EXPERIMENT NO. 520** | | | | | | | | | | | |
| SET UP DAY 0 | | | | | | | | | | | |
| SQUASH PLANTED DAY 16 | | | | | | | | | | | |
| SQUASH HARVESTED DAY 55 | | | | | | | | | | | |
| TOMATOES PLANTED DAY 55 | | | | | | | | | | | |
| TOMATOES HARVESTED DAY 128 | | | | | | | | | | | |
| Control | 0.0 | 0.00 | 5.1 | 13.5 | --- | 99.3 | 38.2 | 89.7 | 34.5 | 22.3 | 8.58 |
| Urea | 0.0 | 0.25 | 4.4 | 22.1 | + 63.7 | 38.1 | 27.2 | 77.3 | 55.21 | 21.9 | 15.64 |
| | 0.0 | 0.50 | 5.5 | 24.0 | + 77.8 | 96.5 | 96.5 | 86.1 | 86.10 | 56.0 | 56.00 |
| | 0.0 | 0.75 | 4.3 | 13.2 | - 2.2 | 64.6 | 34.0 | 49.0 | 25.79 | 23.0 | 12.11 |
| | 0.0 | 1.00 | 4.8 | 16.7 | + 23.7 | 61.1 | 40.7 | 130.6 | 87.07 | 58.5 | 39.00 |
| **EXPERIMENT NO. 521** | | | | | | | | | | | |
| SET UP DAY 0 | | | | | | | | | | | |
| SQUASH PLANTED DAY 15 | | | | | | | | | | | |
| SQUASH HARVESTED DAY 53 | | | | | | | | | | | |
| TOMATOES PLANTED DAY 53 | | | | | | | | | | | |

EP 0 375 725 B1

TABLE 3 (con't)

NEMATODE SUPPRESSION EFFECTS OF SOYBEAN MEAL-UREA COMPOSITIONS IN SECOND (TOMATO) PLANTINGS

NEMATODES
-------- PER 100 CC SOIL ----

| | ROOT-KNOT LARVAE | LESION | SAPRO-PHAGOUS |
|---|---|---|---|
| EXPERIMENT NO. 520 | | | |
| SET UP DAY 0 | | | |
| | | | |
| SQUASH PLANTED DAY 16 | | | |
| SQUASH HARVESTED DAY 55 | | | |
| TOMATOES PLANTED DAY 55 | | | |
| TOMATOES HARVESTED DAY 128 | | | |
| Control | 16.0 | 13.1 | 119.0 |
| | | | |
| Urea | 3.6 | 16.5 | 65.1 |
| | 11.3 | 14.6 | 112.5 |
| | 12.4 | 17.4 | 126.9 |
| | 6.5 | 17.9 | 121.6 |

EXPERIMENT NO. 521
SET UP DAY 0

SQUASH PLANTED
  DAY 15
SQUASH HARVESTED
  DAY 53
TOMATOES PLANTED
  DAY 53

TABLE 3 (con't)

NEMATODE SUPPRESSION EFFECTS OF SOYBEAN MEAL-UREA COMPOSITIONS IN SECOND (TOMATO) PLANTINGS

| | Soil Amendment Conc. (G/KG) | | | Galls/GM Fresh Root | | NEMATODES FROM ROOTS | | | | | |
| | | | | | | ROOT-KNOT LARVAE | | (PRATYLENCHUS) | | SAPROPHAGOUS | |
| | Soybean Meal | Urea | Gall Rate | Number | %Change | (No.) | (No/GM Root) | (No.) | (No/GM Root) | (No.) | (No./GM Root) |
|---|---|---|---|---|---|---|---|---|---|---|---|
| **EXPERIMENT NO. 521 (con't)** | | | | | | | | | | | |
| **TOMATOES HARVESTED DAY 113** | | | | | | | | | | | |
| Control | 0.0 | 0.0 | 5.0 | 36.2 | --- | 178.4 | 137.2 | 93.5 | 71.92 | 89.7 | 69.00 |
| Soybean Meal | 1.0 | 0.0 | 4.9 | 36.7 | - 1.4 | 91.9 | 102.1 | 94.9 | 105.44 | 80.0 | 88.89 |
| | 2.0 | 0.0 | 5.8 | 35.6 | - 1.7 | 111.8 | 124.2 | 66.4 | 73.78 | 59.5 | 66.11 |
| | 3.0 | 0.0 | 4.0 | 15.0 | - 58.6 | 78.5 | 56.1 | 176.3 | 125.93 | 52.5 | 37.50 |
| | 4.0 | 0.0 | 3.0 | 10.0 | - 72.4 | 137.9 | 57.5 | 206.4 | 86.00 | 85.1 | 35.46 |
| SOYBEAN + UREA | 1.0 | 0.5 | 2.3 | 8.2 | - 77.3 | 55.8 | 32.8 | 99.9 | 58.76 | 164.6 | 96.82 |
| | 2.0 | 0.5 | 1.9 | 10.6 | - 70.7 | 135.5 | 94.7 | 113.3 | 70.81 | 76.9 | 48.06 |
| | 3.0 | 0.5 | 0.0 | 0.0 | -100.0 | 0.0 | 0.0 | 96.6 | 33.31 | 103.6 | 35.72 |
| | 4.0 | 0.5 | 0.0 | 0.0 | -100.0 | 2.5 | 0.8 | 79.3 | 26.43 | 24.4 | 8.13 |

EP 0 375 725 B1

TABLE 3 (con't)

NEMATODE SUPPRESSION EFFECTS OF SOYBEAN MEAL-UREA COMPOSITIONS IN SECOND (TOMATO) PLANTINGS

|  | NEMATODES | | |
|  | --------PER 100 CC SOIL------ | | |
|  | ROOT-KNOT LARVAE | LESION | SAPRO-PHAGOUS |
|---|---|---|---|
| EXPERIMENT NO. 521 (con't) | | | |
| TOMATOES HARVESTED DAY 113 | | | |
| Control | 11.8 | 3.4 | 156.1 |
| Soybean Meal | 18.6 | 9.6 | 90.5 |
|  | 27.0 | 4.0 | 91.0 |
|  | 10.5 | 15.5 | 54.4 |
|  | 20.6 | 9.8 | 38.6 |
| SOYBEAN + UREA | 9.6 | 3.8 | 84.1 |
|  | 7.8 | 9.9 | 112.6 |
|  | 0.0 | 0.5 | 79.9 |
|  | 0.0 | 4.0 | 120.3 |

**Example 2**

Effects of Chitin and Phosphate Additions on the Nematicidal and Fertilizer Properties of Soybean Meal-Urea Compositions

Effects of adding various chitin-containing waste materials obtained from shellfish (e.g., crab, crayfish, lobster, prawns and shrimp) processing operations and from fungal mycelia residues of industrial fermentation processes (e.g., production of citric acid, antibiotics and enzymes) to soybean meal-urea compositions were studied in greenhouse experiments by the methods described in Example 1. Crabshell chitin compositions, which are marketed by IGENE Biotechnology, Inc. of Columbia: Maryland under the registered trademark ClandoSan[R], were prepared from the claws and bodies of blue crabs (<u>Callinectes sapidus</u>) after removal of edible crab meat by methods described in McCandliss, Eastwood and Milch (U.S. Pat. No. 4,536,207).

| Composition | Description |
|---|---|
| ClandoSan[R] 601 | Demealed crab shell |
| ClandoSan[R] 719 (1220) | Demineralized crab shell |
| ClandoSan[R] 901 | 75% ClandoSan[R] 601 and 25% ClandoSan[R] 719 (1220) |

Other chitin-containing materials used in these studies included shells obtained from shrimp, crayfish and horseshoe crabs. All such materials as well as otherwise untreated crab shells (crab "meal" or "crab scrap meal") were water-washed and then dried in a hot-air overnight at 100-110°C for approximately 16 hours The dried shell materials were then ground and milled to a particle size such that all of the material passed through a No. 25 U.S.A. Standard Sieve. The materials were, finally, dry blended at room temperature with soybean meal and urea sources in a twin shell (vee cone) blender for approximately 10 minutes to assure adequate homogenization of the mixtures with little or no segregation of particles.

In addition to the above materials, agricultural grade diammonium phosphate and triple superphosphate and spent chitin-containing fungal mycelia obtained from a commercial citric acid fermentation process were also studied to determine their effects as soil amendments. Mycelia were collected in a trammel (no lime used), vacuum filtered and then air dried at 60°C for approximately 20 hours. The dried mycelia, representing approximately 10% of the wet citric mycelium, were then milled, sieved and handled in the same manner as all other test materials.

Representative data are illustrated in Tables 4 through 7. Tables 4 and 6 show the nematode suppression effects of soybean-urea compositions supplemented with various supplements, including chitin (such as crab meal and Fungal Mycelium) and phosphates. Certain ClandoSan[R] compositions are included. Tables 5 and 7 show plant growth effects of the Table 4 and 6 compositions, respectively.

EP 0 375 725 B1

## TABLE 4
### NEMATICIDAL EFFECTS OF CLANDOSAN[R] COMPOSITIONS

SANDY LOAM SOIL
SUMMER CROOKNECK SQUASH
MELOIDOGYNE ARENARIA (NEAL)

SET UP DAY 0
SQUASH PLANTED DAY 15
HARVESTED DAY 53

| COMPOSITION | CONC. SOIL AMENDMENT (G/KG) | | | SOIL CONDITIONS | | | GALLS PER GM. | ROOT |
| | CLANDOSAN[R] 901 | UREA | SOYBEAN MEAL | pH | CONDUCT. | RATE | ROOT | CONDITION |
|---|---|---|---|---|---|---|---|---|
| Control | 0.0 | 0.0 | 0.0 | 6.0 | 33 | 3.2 | 42.5 | 4.0 |
| Urea | 0.0 | 0.5 | 0.0 | 5.4 | 32 | 2.3 | 18.8 | 4.1 |
| Soybean Meal | 0.0 | 0.0 | 1.0 | 5.9 | 31 | 3.9 | 29.0 | 3.7 |
| | 0.0 | 0.0 | 2.0 | 5.7 | 27 | 2.7 | 17.5 | 3.9 |
| | 0.0 | 0.0 | 3.0 | 5.5 | 27 | 2.0 | 25.8 | 4.0 |
| | 0.0 | 0.0 | 4.0 | 5.5 | 33 | 1.0 | 6.4 | 3.8 |
| Urea + Soybean Meal | 0.0 | 0.5 | 1.0 | 5.8 | 26 | 0.5 | 2.0 | 4.3 |
| | 0.0 | 0.5 | 2.0 | 5.7 | 26 | 0.5 | 1.7 | 3.8 |
| | 0.0 | 0.5 | 3.0 | 5.8 | 27 | 0.5 | 2.8 | 3.7 |
| | 0.0 | 0.5 | 4.0 | 5.9 | 48 | 0.0 | 0.0 | 4.0 |
| ClandoSan[R] 901 (74% 601) | 1.0 | 0.0 | 0.0 | 6.2 | 52 | 2.8 | 21.6 | 4.1 |
| ClandoSan[R] 518 | 1.0 | 0.5 | 0.0 | 5.9 | 45 | 0.7 | 3.4 | 4.0 |
| ClandoSan[R] 814 | 1.0 | 0.0 | 1.0 | 6.1 | 46 | 2.6 | 16.1 | 4.2 |
| | 1.0 | 0.0 | 2.0 | 6.0 | 44 | 3.4 | 18.8 | 3.5 |
| | 1.0 | 0.0 | 3.0 | 5.7 | 61 | 3.2 | 22.4 | 3.7 |
| | 1.0 | 0.0 | 4.0 | 5.9 | 45 | 1.6 | 5.8 | 3.3 |

## TABLE 4 (con't)
## NEMATICIDAL EFFECTS OF CLANDOSAN[R] COMPOSITIONS

SANDY LOAM SOIL  
SUMMER CROOKNECK SQUASH  
MELOIDOGYNE ARENARIA (NEAL)

SET UP DAY 0  
SQUASH PLANTED DAY 15  
HARVESTED DAY 53

| COMPOSITION | CONC. SOIL AMENDMENT (G/KG) | | | SOIL CONDITIONS | | | GALLS PER GM. | ROOT |
| | CLANDOSAN[R] 901 | UREA | SOYBEAN MEAL | pH | CONDUCT. | RATE | ROOT | CONDITION |
|---|---|---|---|---|---|---|---|---|
| ClandoSan[R] 1029 | 1.0 | 0.5 | 1.0 | 6.3 | 47 | 0.6 | 2.8 | 4.0 |
| | 1.0 | 0.5 | 2.0 | 6.0 | 48 | 0.2 | 1.3 | 3.7 |
| | 1.0 | 0.5 | 3.0 | 6.0 | 48 | 0.0 | 0.0 | 3.4 |
| | 1.0 | 0.5 | 4.0 | 6.0 | 78 | 0.0 | 0.0 | 3.0 |

EP 0 375 725 B1

## TABLE 5

## FERTILIZER EFFECTS OF CLANDOSAN[R] COMPOSITIONS

SANDY LOAM SOIL  
SUMMER CROOKNECK SQUASH  
MELOIDOGYNE ARENARIA (NEAL)

SET UP DAY 0  
SQUASH PLANTED DAY 15  
HARVESTED DAY 53

| COMPOSITION | CONC. SOIL AMENDMENT (G/KG) | | | HGT. (CM) | TOP HGT. (GM) | TOP WGT. (GM) | ROOT WGT. (GM) | PLANT WEIGHT (% CHANGE) |
|---|---|---|---|---|---|---|---|---|
| | CLANDOSAN[R] 901 | UREA | SOYBEAN MEAL | | | | | |
| Control | 0.0 | 0.0 | 0.0 | 15.7 | 2.2 | 0.40 | 2.6 | --- |
| Urea | 0.0 | 0.5 | 0.0 | 18.7 | 2.5 | 0.32 | 2.8 | + 8 |
| Soybean Meal | 0.0 | 0.0 | 1.0 | 29.9 | 6.1 | 0.69 | 6.8 | + 162 |
| | 0.0 | 0.0 | 2.0 | 33.4 | 6.6 | 0.63 | 7.2 | + 177 |
| | 0.0 | 0.0 | 3.0 | 24.6 | 3.9 | 0.31 | 4.2 | + 62 |
| | 0.0 | 0.0 | 4.0 | 23.3 | 3.9 | 0.47 | 4.4 | + 69 |
| Urea + Soybean Meal | 0.0 | 0.5 | 1.0 | 27.5 | 5.4 | 0.49 | 5.9 | + 127 |
| | 0.0 | 0.5 | 2.0 | 28.5 | 5.5 | 0.58 | 6.1 | + 135 |
| | 0.0 | 0.5 | 3.0 | 36.3 | 10.1 | 0.72 | 10.8 | + 315 |
| | 0.0 | 0.5 | 4.0 | 22.4 | 3.9 | 0.40 | 4.3 | + 65 |
| ClandoSan[R] 901 (75% 601) | 1.0 | 0.0 | 0.0 | 25.3 | 5.0 | 0.51 | 5.5 | + 112 |
| ClandoSan[R] 518 | 1.0 | 0.5 | 0.0 | 28.9 | 6.3 | 0.59 | 6.9 | + 165 |
| ClandoSan[R] 814 | 1.0 | 0.0 | 1.0 | 33.8 | 8.3 | 0.62 | 8.9 | + 242 |
| | 1.0 | 0.0 | 2.0 | 40.6 | 11.2 | 0.85 | 12.1 | + 365 |
| | 1.0 | 0.0 | 3.0 | 44.1 | 12.7 | 0.67 | 13.4 | + 415 |
| | 1.0 | 0.0 | 4.0 | 39.5 | 12.9 | 1.04 | 13.9 | + 435 |

EP 0 375 725 B1

## TABLE 5 (con't)

### FERTILIZER EFFECTS OF CLANDOSAN[R] COMPOSITIONS

SANDY LOAM SOIL                      SET UP DAY 0
SUMMER CROOKNECK SQUASH        SQUASH PLANTED DAY 15
MELOIDOGYNE ARENARIA (NEAL)       HARVESTED DAY 53

| COMPOSITION | CONC. SOIL AMENDMENT (G/KG) | | | HGT. (CM) | TOP HGT. (GM) | TOP WGT. (GM) | ROOT WGT. (GM) | PLANT WEIGHT (% CHANGE) |
|---|---|---|---|---|---|---|---|---|
| | CLANDOSAN[R] 901 | UREA | SOYBEAN MEAL | | | | | |
| ClandoSan[R] 1029 | 1.0 | 0.5 | 1.0 | 37.6 | 11.1 | 0.71 | 11.8 | + 354 |
| | 1.0 | 0.5 | 2.0 | 38.4 | 12.3 | 0.76 | 13.1 | + 404 |
| | 1.0 | 0.5 | 3.0 | 37.4 | 11.0 | 0.66 | 11.7 | + 350 |
| | 1.0 | 0.5 | 4.0 | 35.7 | 12.8 | 1.25 | 14.1 | + 442 |

EP 0 375 725 B1

## TABLE 6

### NEMATICIDAL EFFECTS OF SUPPLEMENTING SOYBEAN – UREA COMPOSITIONS

SANDY LOAM SOIL
SUMMER CROOKNECK SQUASH
MELOIDOGYNE ARENARIA (NEAL)

| COMPOSITION | CONCENTRATION SOIL AMENDMENT (G/KG) | | | | | | "CHITIN" SOURCE |
|---|---|---|---|---|---|---|---|
| | Soybean Meal | Urea | "Chitin" | DAP | Super-phosphate | Total | |
| Control | 0.0 | 0.0 | 0.0 | 0.0 | 0.0 | 0.0 | ---- |
| Temik 15G (60 mgm) | 0.0 | 0.0 | 0.0 | 0.0 | 0.0 | 0.0 | ---- |
| Soybean Meal-Urea Compositions: | 1.0 | 0.5 | 1.0 | 0.0 | 0.0 | 2.5 | Blue Crab |
| | 1.0 | 0.5 | 1.0 | 0.0 | 0.0 | 2.5 | Horseshoe Crab |
| | 1.0 | 0.5 | 1.0 | 0.0 | 0.0 | 2.5 | Fungal Mycelium |
| | 1.0 | 0.5 | 0.0 | 1.0 | 0.0 | 2.5 | ---- |
| | 1.0 | 0.5 | 0.0 | 0.5 | 0.5 | 2.5 | ---- |

EP 0 375 725 B1

## TABLE 6 (con't)

### NEMATICIDAL EFFECTS OF SUPPLEMENTING SOYBEAN - UREA COMPOSITIONS

SET UP DAY 0
SQUASH PLANTED DAY 18
HARVESTED DAY 60

| COMPOSITION | AMENDMENT | | | GALLS/GM ROOT | GALL RATE | NEMATODES FROM ROOTS | | NEMATODES PER 100 CC. SOIL | |
| --- | --- | --- | --- | --- | --- | --- | --- | --- | --- |
| | % UREA | C:N RATIO | KJELDAHL "PROTEIN" (Gas %) | | | Root-Knot Larvae | Sapro-phagous | Root-Knot Larvae | Sapro-phagous |
| Control | 20.0% | ---- | ---- | 24.8 | 1.8 | 73.4 | 13.1 | 13.9 | 129.4 |
| Temik 15G (60 mgm) | 20.0% | ---- | ---- | 1.8 | 0.2 | 0.3 | 3.4 | 0.0 | 17.9 |
| Soybean Meal-Urea Compositions: | 20.0% | 2.2 | 87.2 | 9.6 | 1.1 | 13.6 | 12.3 | 5.3 | 149.0 |
| | 20.0% | 1.8 | 96.1 | 5.3 | 0.6 | 2.9 | 9.3 | 2.6 | 96.8 |
| | 20.0% | 2.8 | 86.9 | 2.6 | 0.4 | 0.0 | 7.6 | 0.0 | 186.8 |
| | 20.0% | 1.2 | 107.0 | 0.0 | 0.0 | 0.0 | 5.1 | 0.0 | 74.0 |
| | 20.0% | 1.5 | 94.5 | 0.0 | 0.0 | 0.0 | 3.9 | 0.0 | 70.6 |

EP 0 375 725 B1

### TABLE 7

**PLANT GROWTH EFFECTS OF SUPPLEMENTING SOYBEAN – UREA COMPOSITIONS**

SANDY LOAM SOIL
SUMMER CROOKNECK SQUASH
MELOIDOGYNE ARENARIA (NEAL)

| COMPOSITION | CONCENTRATION SOIL AMENDMENT (G/KG) | | | | | | "CHITIN" SOURCE |
|---|---|---|---|---|---|---|---|
| | Soybean Meal | Urea | "Chitin" | DAP | Super-phosphate | Total | |
| Control | 0.0 | 0.0 | 0.0 | 0.0 | 0.0 | 0.0 | ---- |
| Temik 15G (60 mgm) | 0.0 | 0.0 | 0.0 | 0.0 | 0.0 | 0.0 | ---- |
| Soybean Meal-Urea Compositions: | 1.0 | 0.5 | 1.0 | 0.0 | 0.0 | 2.5 | Blue Crab |
| | 1.0 | 0.5 | 1.0 | 0.0 | 0.0 | 2.5 | Horseshoe Crab |
| | 1.0 | 0.5 | 1.0 | 0.0 | 0.0 | 2.5 | Fungal Mycelium |
| | 1.0 | 0.5 | 0.0 | 1.0 | 0.0 | 2.5 | ---- |
| | 1.0 | 0.5 | 0.0 | 0.5 | 0.5 | 2.5 | ---- |

TABLE 7 (con't)

PLANT GROWTH EFFECTS OF SUPPLEMENTING SOYBEAN - UREA COMPOSITIONS

SET UP DAY 0
SQUASH PLANTED DAY 18
HARVESTED DAY 60

| COMPOSITION | AMENDMENT | | | TOP HGT (CMS) | TOP WGT (GMS) | ROOT WGT (GMS) | ROOT WGT (GMS) |
| --- | --- | --- | --- | --- | --- | --- | --- |
| | % UREA | C:N RATIO | KJELDAHL "PROTEIN" (Gas) | | | | |
| Control | ---- | ---- | ---- | 27.2 | 5.3 | 0.21 | 5.5 |
| Temik 15G (60 mgm) | ---- | ---- | ---- | 26.1 | 4.9 | 0.17 | 5.1 |
| Soybean Meal-Urea Compositions: | 20.0% | 2.2 | 87.2 | 30.4 | 10.7 | 0.27 | 11.0 |
| | 20.0% | 1.8 | 96.1 | 31.0 | 8.8 | 0.19 | 9.0 |
| | 20.0% | 2.8 | 86.9 | 28.9 | 5.9 | 0.19 | 6.1 |
| | 20.0% | 1.2 | 107.0 | 28.3 | 4.9 | 0.15 | 5.1 |
| | 20.0% | 1.5 | 94.5 | 29.2 | 7.0 | 0.20 | 7.2 |

**Example 3**

Experiments similar to those described herein were carried out in accordance with the information set forth in the following Tables 8, 9, 10 and 11 employing ClandoSan[R] 618 and Temik. The beneficial effects of ClandoSan[R] 618 alone and in combination with Temik[R] are shown.

22

## TABLE 8
## DOSE:RESPONSE EFFECTS OF CLANDOSAN[R] 618

One Kilogram of 50:50 Sand:Soil Mixture Per Pot in Greenhouse Experiments; Elberta Soil (Kaiser); Five seeds "Davis" Soybean (Glycine max -- pea legume family) Per Pot; Set Up Day 0 (March 1988), Soybeans Planted Day 9 and Harvested Day 44. Average of Eight Pots, Random Block Design.

| ClandoSan[R] 618 Soil Concentration (Gm/Kgm Soil) | Top Height (Cm) | Top Weight (Gm) | Galls/Gram Fresh Root | Root-knot Larvae* | Non-Parasitic Nematodes* | Chitinase Activity** |
|---|---|---|---|---|---|---|
| 0 (Control) | 25.7 | 2.1 | 24.5 | 1,287.0 | 32.0 | 6.12 |
| 1.0 | 29.2 | 2.6 | 19.1 | 1,046.9 | 49.3 | 9.03 |
| 2.0 | 29.6 | 2.9 | 18.2 | 954.6 | 105.3 | 8.57 |
| 3.0 | 39.2 | 5.9 | 5.2 | 308.5 | 196.9 | 10.24 |
| 4.0 | 39.0 | 6.7 | 0.4 | 0.6 | 269.1 | 9.28 |
| 5.0 | 38.0 | 6.8 | 0 | 0 | 214.6 | 8.68 |
| 6.0 | 28.5 | 4.6 | 0 | 0 | 204.5 | 8.14 |

\*   Per 100 cc. soil

\*\*  ug p-nitrophenol released/hour/gram of dry soil (Nematropica 123: 71-84, 1982; Plant and Soil 75: 95-106, 1983)

EP 0 375 725 B1

EP 0 375 725 B1

## TABLE 9

COMPARATIVE EFFECTS OF CLANDOSAN$^R$ 618 AND ALDICARB (TEMIK$^R$ 15G)

Seven Kgm Sand:Soil Mixture in One Square Foot Microplots; Elberta Soil (Kaiser); One Seedling "Black Beauty" Eggplant (Solanum melongena -- nightshade family) Per Microplot; Set Up Day 0 (June, 1987), Eggplants Planted Day 19 and Final Harvest on Day 113 (11 Total Harvests); Average of Eight Microplots, Random Block Design, Auburn, Alabama.

| Treatment | Total No. Fruit | Total Yield (Lbs./Plot) | Fresh Shoot Wgt. (Lbs.) | Root-Knot Larvae* | Non-Parasitic Nematodes** | Soil pH |
|---|---|---|---|---|---|---|
| Control | 8.5 | 5.4 | 2.6 | 232 | 95 | 6.3 |
| Control + Temik$^R$ (0.83 g/plot) | 14.1 | 8.5 | 3.9 | 270 | 71 | 6.3 |
| ClandoSan$^R$ (4 g/kgm soil) | 15.6 | 8.8 | 3.6 | 176 | 105 | 6.3 |
| ClandoSan$^R$ + Temik$^R$ (as above) | 19.0 | 11.6 | 4.9 | 162 | 83 | 6.4 |

---

\*   M. incognita juveniles per 100 cc. soil

\*\*   Saprophagous nematodes per 100 cc. soil

EP 0 375 725 B1

## TABLE 10

### COMPARATIVE EFFECTS OF CLANDOSAN$^R$ 618 AND ALDICARB (TEMIK$^R$ 15G)

Seven Kgm Sand:Soil Mixture in One Square Foot Microplots; Elberta Soil (Kaiser); Five Seeds "Pink Eye" Purple Hull Cowpeas (<u>Vigna</u> <u>unguiculata</u> -- pea legume family) Per Microplot; Set Up Day 0 (June 1987). Peas Planted Day 12 and Final Harvest on Day 107 (6 Total Harvests); Average of Eight Microplots, Random Block Design, Auburn, Alabama.

| Treatment | Total Yield (Gms/Plot) | Total No. Pods | Plant Wgt. (Lbs.) | Root-Knot Larvae* | Non-Parasitic Nematodes* | Soil pH |
|---|---|---|---|---|---|---|
| Control | 987.6 | 193.1 | 4.0 | 33.3 | 134.0 | 6.4 |
| Control + Temik$^R$ (0.83 g/plot) | 1,016.9 | 196.0 | 5.8 | 16.1 | 131.8 | 6.5 |
| ClandoSan$^R$ (4 g/kgm soil) | 1,156.5 | 208.6 | 3.9 | 3.4 | 203.4 | 6.6 |
| ClandoSan$^R$ + Temik$^R$ (as above) | 1,118.9 | 189.9 | 4.3 | 0.3 | 232.0 | 6.6 |

* Per 100 cc. soil

TABLE 11

COMPARATIVE EFFECTS OF CLANDOSAN$^R$ 618 AND ALDICARB (TEMIK$^R$ 15G)

Seven Kgm. Sand:Soil Mixture in One Square Foot Microplots; Elberta Soil (Gottler); One Seedling "Culbro 1" Tobacco (Nicotiana tabacum -- nightshade family) Per Microplot; Set Up Day 0 (August 1987), Tobacco Planted Day 9 and Harvested Day 60; Average of Eight Microplots, Random Block Design, Auburn, Alabama.

| Treatment | Leaf Wgt. (Gm.) | Stem Wgt. (Gm.) | Root-Knot Larvae* | Cyst Larvae* | Non-Parasitic Nematodes* | Soil pH |
|---|---|---|---|---|---|---|
| Control | 188.0 | 166.7 | 523.0 | 5.4 | 64.9 | 6.5 |
| Control + Temik$^R$ (0.83 g/plot) | 299.9 | 272.5 | 365.4 | 10.1 | 150.0 | 6.5 |
| ClandoSan$^R$ (4 g/kgm soil) | 366.5 | 403.0 | 226.4 | 0.9 | 127.8 | 6.5 |
| ClandoSan$^R$ + Temik$^R$ (as above) | 347.4 | 402.9 | 72.3 | 0.6 | 178.5 | 6.5 |

* Per 100 cc. soil

INDUSTRIAL APPLICABILITY

As can be seen from the preceding disclosure, the present invention is industrially useful in providing on the one hand chitin-containing biological waste materials in a range of soil amendment products and on

26

the other hand providing soybean meal urea based soil amendment compositions, all of which are characterized as having nematistatic and nematicidal as well as plant nutritional properties which are useful in horticultural and agricultural applications.

The preceding examples can be repeated with similar success by substituting the generically or specifically described reactants and/or operating conditions of this invention for those specifically used in the examples. From the foregoing description, one skilled in the art to which this invention pertains can easily ascertain the essential characteristics thereof and can make various changes and modifications to adapt it to various usages and conditions.

## Claims

1. The use of a composition comprising in admixture;
   a) vegetable, fruit or nut meals, and
   b) a source of urea,
   in the stimulation of reproduction and development of normal soil microflora in plant growth media which produce ammonia and enzymes that are antagonistic to plant pathogenic nematodes of selected crop plants, the ratio of a) to urea provided by b) in the composition being 2:1 to 8:1, by applying 1 to 3 grams of the composition per kilogram of medium.

2. A use as claimed in claim 1 wherein component a) is soybean meal and component b) is urea.

3. A use as claimed in claim 2 wherein the ratio of carbon atoms to nitrogen atoms in the composition is five to one or less.

4. A use as claimed in claim 2 wherein the composition has a high kjeldahl protein content.

5. A use as claimed in claim 2 wherein the composition is in admixture with a plant growth medium.

6. A use as claimed in claim 2 wherein the composition further comprises a chitin-protein complex or an ammonium phosphate in a concentration and amount effective to further suppress the growth of the plant-pathogenic nematodes and to further reduce the phytotoxicity of the composition to the selected crop plant.

7. A use as claimed in claim 6 wherein the source of the chitin-protein complex is dried crustacean shell wastes of seafood processing operations or fungal mycelial residues after industrial fermentations.

8. A use as claimed in claim 1 wherein the composition is admixed with the soil at least one week prior to seeding or planting of the crop plant in the plant growth medium.

9. A use as claimed in claim 8 wherein the crop plant is a deciduous fruit or nut crop.

10. A soil amendment composition capable of stimulating the reproduction and development of normal soil microflora which produce ammonia and enzymes that are antagonistic to plant pathogenic nematodes of selected crop plants, which comprise in admixture:
    (a) non-heat-treated vegetable, fruit or nut meals, and
    (b) a source of urea,
    the ratio by weight of (a) to urea provided by (b) in said composition being 2:1 to 8:1, the amounts of (a) and (b) in said composition being adapted to provide 1 to 3 grams of said composition per kilogram of soil in which said composition is admixed.

11. A composition according to claim 10, wherein component (a) is soybean meal and the source of urea is urea.

12. A composition according to claim 10, wherein the ratio of carbon atoms to nitrogen atoms is five (5) to one (1) or less.

13. A composition according to claim 10 having a high Kjeldahl protein content.

**14.** A composition of matter comprising a plant growth medium in admixture with a nematicidally effective amount of the composition according to claim 11.

**15.** A composition according to claim 11, further comprising a chitin-protein complex or an ammonium phosphate in a concentration and amount effective to further suppress the growth of said plant-pathogenic nematodes and to further reduce the phytotoxicity of said composition to said selected crop plant.

**16.** A composition according to claim 15, wherein the source of chitin-protein complex is dried crustacean shell wastes of seafood processing operations or fungal mycelial residues remaining after industrial fermentation.

## Patentansprüche

**1.** Verwendung einer Zusammensetzung, die in Beimengung aufweist:
(a) Pflanzen-, Obst- oder Nußkernmehle und
(b) eine Harnstoffquelle,
für die Anregung der Reproduktion und Entwicklung von normaler Bodenmikroflora in Pflanzenwachstumsmedien, die Ammoniak und Enzyme produzieren, die für Pflanzen pathogenen Nematoden ausgewählter Nutzpflanzen entgegenwirken, wobei das Verhältnis von a) zu dem von b) gelieferten Harnstoff in der Zusammensetzung 2:1 bis 8:1 ist, durch Aufbringen von 1 bis 3 g der Zusammensetzung je Kilogramm Medium.

**2.** Verwendung nach Anspruch 1, wobei die Komponente a) Sojabohnenmehl und die Komponente b) Harnstoff ist.

**3.** Verwendung nach Anspruch 2, wobei das Verhältnis von Kohlenstoffatomen zu Stickstoffatomen in der Zusammensetzung fünf zu eins oder weniger ist.

**4.** Verwendung nach Anspruch 2, wobei die Zusammensetzung einen hohen Anteil an Kjeldahl-Protein hat.

**5.** Verwendung nach Anspruch 2, wobei die Zusammensetzung einem Pflanzenwachstumsmedium beigemengt ist.

**6.** Verwendung nach Anspruch 2, wobei die Zusammensetzung ferner einen Chitin-Protein-Komplex oder ein Ammoniumphosphat in einer Konzentration und Menge aufweist, die wirksam sind, um das Wachstum der für Pflanzen pathogenen Nematoden weiter zu hemmen und die Pflanzenschädlichkeit der Zusammensetzung für die ausgewählte Nutzpflanze weiter herabzusetzen.

**7.** Verwendung nach Anspruch 6, wobei die Quelle des Chitin-Protein-Komplexes getrocknete Krustentierschalenabfälle aus Meerestier-Verarbeitungsprozessen oder Pilzgeflechtrückstände nach technischen Gärverfahren ist.

**8.** Verwendung nach Anspruch 1, wobei die Zusammensetzung dem Boden wenigstens eine Woche vor dem Aussäen oder Pflanzen der Nutzpflanze in dem Pflanzenwachstumsmedium beigemischt wird.

**9.** Verwendung nach Anspruch 8, wobei die Nutzpflanze eine laubabwerfende Obst- oder Nußpflanze ist.

**10.** Bodenverbesserungs-Zusammensetzung, die fähig ist, die Reproduktion und Entwicklung von normaler Bodenmikroflora anzuregen, die Ammoniak und Enzyme produziert, die für Pflanzen pathogenen Nematoden von ausgewählten Nutzpflanzen entgegenwirken, wobei die Zusammensetzung in Beimengung aufweist:
(a) nichtwärmebehandelte Pflanzen-, Obst- oder Nußkernmehle und
(b) eine Harnstoffquelle,
wobei das Gewichtsverhältnis von (a) zu dem von (b) gelieferten Harnstoff in der Zusammensetzung 2:1 bis 8:1 ist und die Mengen von (a) und (b) in der Zusammensetzung ausgelegt sind, um 1 bis 3 g der Zusammensetzung je Kilogramm Boden, dem die Zusammensetzung beigemischt wird, zu ergeben.

**11.** Zusammensetzung nach Anspruch 10, wobei die Komponente (a) Sojabohnenmehl und die Harnstoffquelle Harnstoff ist.

**12.** Zusammensetzung nach Anspruch 10, wobei das Verhältnis von Kohlenstoffatomen zu Stickstoffatomen fünf (5) zu eins (1) oder weniger ist.

**13.** Zusammensetzung nach Anspruch 10, die einen hohen Anteil an Kjeldahl-Protein hat.

**14.** Stoffzusammensetzung, die ein Pflanzenwachstumsmedium in Beimengung mit einer nematozid wirksamen Menge der Zusammensetzung nach Anspruch 11 aufweist.

**15.** Zusammensetzung nach Anspruch 11, die ferner einen Chitin-Protein-Komplex oder ein Ammoniumphosphat in einer Konzentration und Menge aufweist, die wirksam sind, um das Wachstum der für Pflanzen pathogenen Nematoden weiter zu hemmen und die Pflanzenschädlichkeit der Zusammensetzung für die ausgewählte Nutzpflanze weiter herabzusetzen.

**16.** Zusammensetzung nach Anspruch 15, wobei die Quelle des Chitin-Protein-Komplexes getrocknete Krustentierschalenabfälle aus Meerestier-Verarbeitungsprozessen oder Pilzgeflechtrückstände nach technischen Gärverfahren ist.

## Revendications

**1.** Utilisation d'une composition comprenant en mélange additionnel ;
   a) des farines de légumes, de fruits ou de noix, et
   b) une source d'urée,
pour stimuler la reproduction et le développement dans des milieux de culture pour végétaux, d'une microflore de sol normale qui produit de l'ammoniaque et des enzymes antagonistes des nématodes pathogéniques des plantes de cultures sélectionnées, le rapport de a) à l'urée apportée par b) dans la composition étant de 2:1 à 8:1, par l'apport de 1 à 3 grammes de la composition par kilogramme de milieu.

**2.** Utilisation selon la revendication 1, dans laquelle le composant a) est de la farine de soja et le composant b) est de l'urée.

**3.** Utilisation selon la revendication 2, dans laquelle le rapport des atomes de carbone aux atomes d'azote dans la composition est de cinq pour un ou moins.

**4.** Utilisation selon la revendication 2, dans laquelle la composition possède une haute teneur kjeldahl en protéines.

**5.** Utilisation selon la revendication 2, dans laquelle la composition est mélangée de manière additionnelle à un milieu de culture pour plantes.

**6.** Utilisation selon la revendication 2, dans laquelle la composition comprend en outre en complexe chitine-protéine ou un phosphate d'ammonium en concentration et quantité suffisantes pour supprimer en outre la croissance des nématodes pathogéniques pour les plantes et pour réduire en outre la phytotoxicité de la composition sur la plante de culture sélectionnée.

**7.** Utilisation selon la revendication 6, dans laquelle la source du complexe chitine-protéine est constituée par des déchets séchés de coquilles de crustacés provenant d'opérations de traitement de fruits de mer, ou par des résidus de mycéliums consécutifs aux fermentations industrielles.

**8.** Utilisation selon la revendication 1, dans laquelle la composition est mélangée de manière additionnelle au sol au moins une semaine avant de semer ou de planter les plantes de culture dans le milieu de culture pour végétaux.

**9.** Utilisation selon la revendication 8, dans laquelle la plante de culture est une plante décidue à fruit ou noix.

**10.** Composition pour amendement de sol capable de stimuler la reproduction et le développement d'une microflore de sol normale produisant de l'ammoniaque et des enzymes antagonistes des nématodes pathogéniques pour les plantes de cultures sélectionnées, qui comprennent en mélange additionnel :

(a) des farines de légumes, fruits ou noix non traitées à la chaleur, et

(b) une source d'urée

le rapport en poids de (a) par rapport à l'urée apportée par (b) dans ladite composition étant de 2:1 à 8:1, les quantités de (a) et (b) dans ladite composition étant adaptées pour apporter 1 à 3 grammes de ladite composition par kilogramme de sol dans lequel ladite composition est mélangée.

**11.** Composition selon la revendication 10, dans laquelle le composant (a) est de la farine de soja et la source d'urée est de l'urée.

**12.** Composition selon la revendication 10, dans laquelle le rapport des atomes de carbone aux atomes d'azote dans la composition est de cinq (5) pour un (1) ou moins.

**13.** Composition selon la revendication 10, ayant une forte teneur kjeldahl en protéines.

**14.** Composition de matières comprenant un milieu de culture pour plantes mélangé de manière additionnelle à une quantité suffisamment nématicide de la composition selon la revendication 11.

**15.** Composition selon la revendication 11, comprenant en outre un complexe chitine-protéine ou un phosphate d'ammonium en concentration et quantité suffisantes pour supprimer en outre la croissance desdits nématodes pathogéniques pour les plantes et pour diminuer en outre la phytotoxicité de ladite composition sur ladite plante de culture sélectionnée.

**16.** Utilisation selon la revendication 15, dans laquelle la source du complexe chitine-protéine est constituée par des déchets séchés de coquilles de crustacés provenant d'opérations de traitement de fruits de mer, ou par des résidus de mycéliums consécutifs aux fermentations industrielles.